Europäisches Patentamt

European Patent Office

Office européen des brevets

(11) Numéro de publication: **0 393 286**
**A1**

## (12) DEMANDE DE BREVET EUROPEEN

(21) Numéro de dépôt: 89401081.8

(22) Date de dépôt: 19.04.89

(51) Int. Cl.5: **B60R 9/042**

(43) Date de publication de la demande:
24.10.90 Bulletin 90/43

(84) Etats contractants désignés:
AT BE CH DE ES FR GB GR IT LI LU NL SE

(71) Demandeur: **IDBEST SARL**
**57 rue de la Grande Ceinture**
**F-94100 St. Maur des Fossés(FR)**

(72) Inventeur: **Pobanz, Gérard**
**Les longues pièces de Motteux**
**27810 Marcilly sur Eure(FR)**

(74) Mandataire: **Arnaud, Jean Pierre Alfred**
**Cabinet Arnaud 94 rue Saint-Lazare**
**F-75009 Paris(FR)**

(54) **Appareil de manutention automatique de charges allongées sur le toit d'un véhicule.**

(57) L'appareil de manutention est plus particulièrement destiné à monter ou descendre des charges allongées (6) sur le, ou du toit (3) d'un véhicule (2). L'appareil comporte au moins un organe support (7a, 7b) de réception d'une charge (6) comme par exemple une échelle. L'appareil comporte en outre des organes de guidage (9a, 9b) de l'organe support (7a, 7b) et des moyens de déplacement (32, 41a, 41b) dudit organe support accouplés à un mécanisme d'entraînement (M) par l'intermédiaire d'une boîte à engrenages (44) et d'un réducteur (R).

FIG. 1

La présente invention a pour objet un appareil de manutention automatique de charges allongées sur le toit d'un véhicule plus particulièrement destiné à monter ou descendre des charges sur le ou à partir dudit toit du véhicule, notamment du genre fourgon ou camionnette. Ces charges peuvent être constituées par des éléments encombrants et lourds tels que par exemple des profilés, des tubes ou des échelles, etc ... .

La manutention de telles charges pour les monter ou les descendre sur le ou à partir du toit d'un fourgon ou camionnette exige généralement la présence simultanée d'au moins deux personnes qui doivent déployer des efforts physiques importants pour soulever à plus de deux mètres la charge.

Pour faciliter cette manutention, on connaît des dispositifs qui comportent un support mobile de réception de la charge-relié par un lien souple à un treuil destiné à hisser ledit support. Le support mobile est également muni d'une roulette qui glisse contre la paroi du véhicule.

Mais cette roulette risque de rayer et de déformer la tôle constituant la paroi extérieure du véhicule, à la suite de plusieurs montées ou descentes.

L'invention a pour but de remédier à ces inconvénients en proposant un appareil de manutention simple et fiable permettant de monter et descendre automatiquement une charge sur le ou à partir du toit d'un véhicule. Toutes les opérations sont automatisées et peuvent être effectuées en peu de temps par un seul opérateur à partir d'un tableau central de commande

L'invention a pour objet un appareil de manutention de charges allongées sur le toit d'un véhicule et plus particulièrement destiné à monter ou des-cendre des charges sur le ou à partir dudit toit, comportant au moins un organe support de réception d'une charge, caractérisé en ce qu'il comporte en outre un bâti de guidage de l'organe support, des moyens de déplacement dudit organe support accouplé à un mécanisme d'entraînement.

Selon un premier mode de réalisation de l'appareil de manutention, le bâti de guidage de l'organe support est constitué de deux rails s'étendant sur l'une ou les deux parois latérales du véhicule et se prolongeant sur le toit dudit véhicule.

Selon un second mode de réalisation de l'appareil de manutention, le bâti de guidage de l'organe support est constitué par deux montants verticaux disposés de part et d'autre dudit organe support.

D'autres particularités et avantages de l'invention apparaîtront au cours de la description qui va suivre, faite en référence aux dessins annexés qui en montrent plusieurs modes de réalisation à titre d'exemples non limitatifs :

- la figure 1 est une vue schématique en perspective d'un premier mode de réalisation de l'appareil de manutention conforme à l'invention, monté sur un véhicule ;

- la figure 2 est une vue schématique transversale de l'appareil de la figure 1 ;

- la figure 3 est une coupe transversale d'un support de l'appareil selon la ligne 3-3 de la figure 4 ;

- la figure 4 est une vue latérale du support de la figure 3 ;

- la figure 5 est un schéma de la chaine cinématique d'entraînement de l'appareil de manutention selon le premier mode de réalisation ;

- la figure 6 est une vue latérale schématique d'un dispositif de verrouillage destiné à bloquer le support sur le toit.

- la figure 7 est une vue latérale schématique d'un appareil de manutention selon un second mode de réalisation de l'invention ;

- la figure 8 est une schématique transversale de l'appareil de la figure 7 ;

- la figure 9 est un schéma de la chaîne cinématique d'entraînement de l'appareil de manutention selon le second mode de réalisation.

L'appareil de manutention selon l'invention est destiné à être monté sur un véhicule de transport 2 et notamment sur l'une au moins des parois latérales 4 et 5 et/ou sur le toit dudit véhicule.

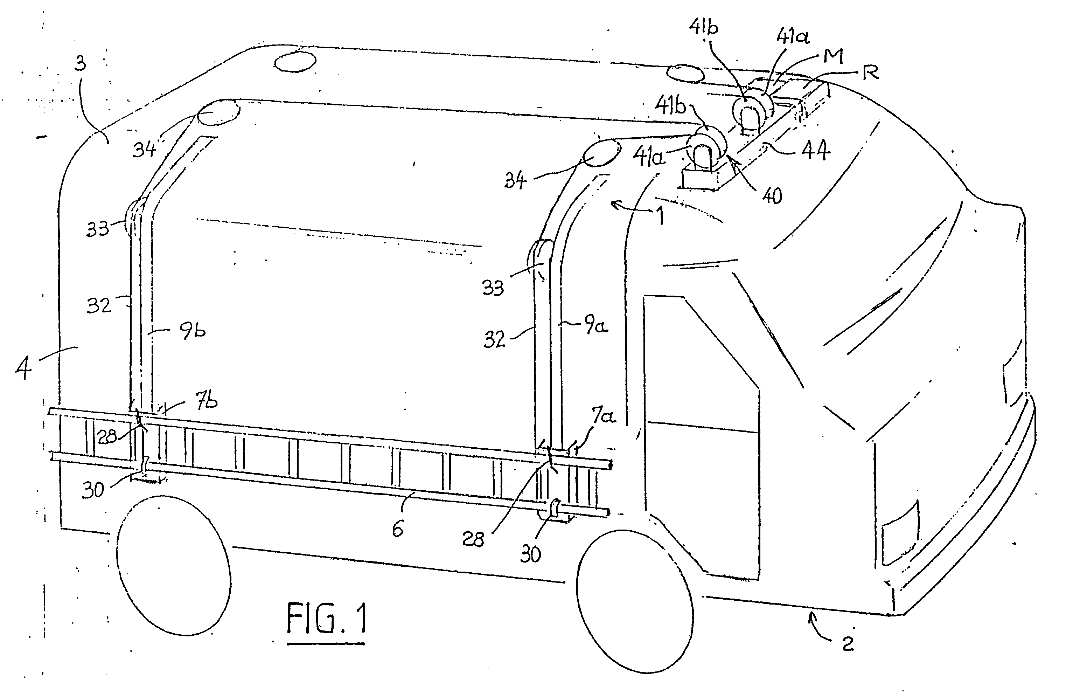

Dans le premier mode de réalisation représenté aux figures 1 à 5, l'appareil se compose de deux ensembles symétriques et identiques permettant chacun la montée ou la descente de charges 6 de part et d'autre du véhicule 2.

Les charges peuvent être constituées par des objets lourds et encombrants tels que par exemple des échelles, des profilés ou des tubes.

Chaque ensemble de l'appareil de manutention comporte un organe support mobile constitué par un chariot avant 7a et un chariot arrière 7b supportant par exemple une échelle 6. Ces deux chariots 7a et 7b sont identiques et chacun d'eux est monté mobile sur un rail 9a respectivement 9b d'une section de préférence rectangulaire. Les deux rails 9a, 9b forment donc un bâti de guidage pour les chariots 7a et 7b.

Chaque rail 9a, 9b épouse la forme de véhicule 2 et comporte de manière générale une partie inférieure s'étendant verticalement sur la paroi latérale du véhicule et une partie supérieure incurvée sur le toit dudit véhicule.

Les rails 9a, 9b sont fixés sur le véhicule 2 au moyen d'entretoises 10 de telle manière que lesdits rails s'étendent à une certaine distance des parois latérales et du toit dudit véhicule.

Les rails 9a et 9b opposés de chaque ensemble de l'appareil peuvent être reliés sur le toit entre eux par des éléments intermédiaires non représentés, de façon à former une seule pièce, ce qui facilite la pose sur le véhicule.

Par ailleurs, les parties verticales des rails 9a, 9b peuvent être séparées des parties incurvées et montées pivotantes sur la paroi du véhicule de façon à s'escamoter si elles rencontrent un obstacle.

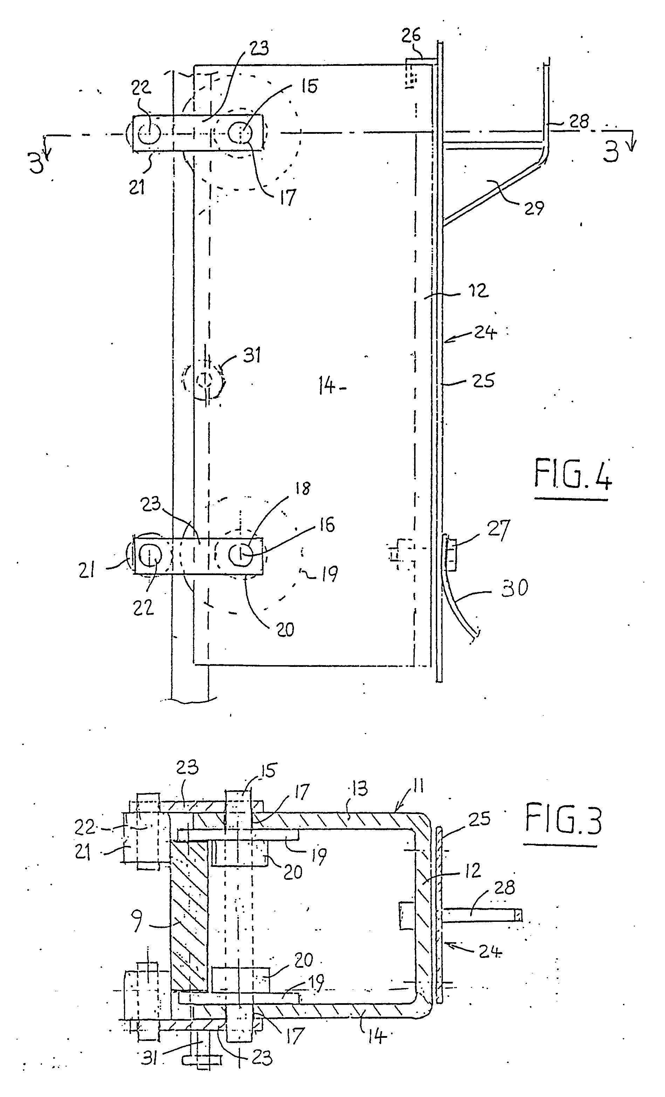

Les figures 3 et 4 représentent à plus grande échelle par exemple le chariot 7a formant support mobile pour la charge. Le chariot 7a comporte un châssis 11 constitué par une âme rectangulaire 12 et par deux ailes rectangulaires latérales 13, 14 s'étendant perpendiculairement à l'âme 12 de façon que la section transversale du châssis soit en forme de U. Le châssis 11 peut également être réalisé en une seule pièce.

Le châssis 11 est muni de deux essieux parallèles horizontaux respectivement 15 et 16 logés dans des ouvertures respectivement 17 et 18 ménagées dans les deux ailes 13, 14 du côté opposé à l'âme rectangulaire 12.

Sur la partie de chaque essieu s'étendant à l'intérieur du châssis 11, un flasque de guidage 19 est monté de chaque côté de telle manière que l'une des faces de chaque flasque 19 soit en appui contre l'aile 13 ou 14 correspondante et que l'autre face soit en contact de guidage avec la face transversale du rail 9.

Par ailleurs, le guidage du châssis 11 sur le rail 9 est assuré par une première et une seconde paires de galets respectivement 20 et 21 disposées de part et d'autre du dit rail 9.

La première paire de galets 20 est enfilée sur l'essieu 15 à proximité immédiate des flasques 19 et roule sur la face longitudinale correspondante du rail 9.

La seconde paire de galets 21 est disposée de l'autre côté du rail 9 et chaque galet est monté rotatif sur un axe 22 s'étendant parallèlement à l'essieu 15 et fixé à l'une des extrémités d'un bras 23 dont l'autre extrémité est articulée sur l'extrémité débordante dudit essieu 15. Il en est de même pour l'essieu 16.

Pour permettre à chaque chariot 7a, 7b de passer sur la partie incurvée du rail correspondant 9a, 9b, un jeu est prévu entre les galets 20 et 21 et ledit rail.

Un élément porteur amovible sous forme d'un porte-échelle 24 est associé à chaque chariot. Le porte-échelle comporte une plaque rectangulaire 25 par lequel il est fixé sur le châssis du chariot à l'aide de deux crochets 26 disposés à l'extrémité avant de la plaque et qui viennent s'accrocher sur le rebord avant de l'âme 12 du châssis. Le porte-échelle est immobilisé sur le châssis à l'aide d'un organe de fixation sous forme d'un boulon 27.

Le porte-échelle 24 est muni à sa partie supérieure d'un fer 28 en forme de L dont l'extrémité libre est dirigée vers le haut, l'ensemble étant rigidifié par au moins une équerre 29 fixée sur la plaque 25.

De plus, le porte-échelle 24 comporte à sa partie inférieure au moins une sangle 30 de maintien de l'échelle pendant les déplacements du véhicule.

Les porte-échelles sont amovibles et peuvent facilement être remplacés par tout autre organe comme par exemple des porte-tubes, des porte-profilés, etc ... qui peuvent être fixés aux chariots de la même façon.

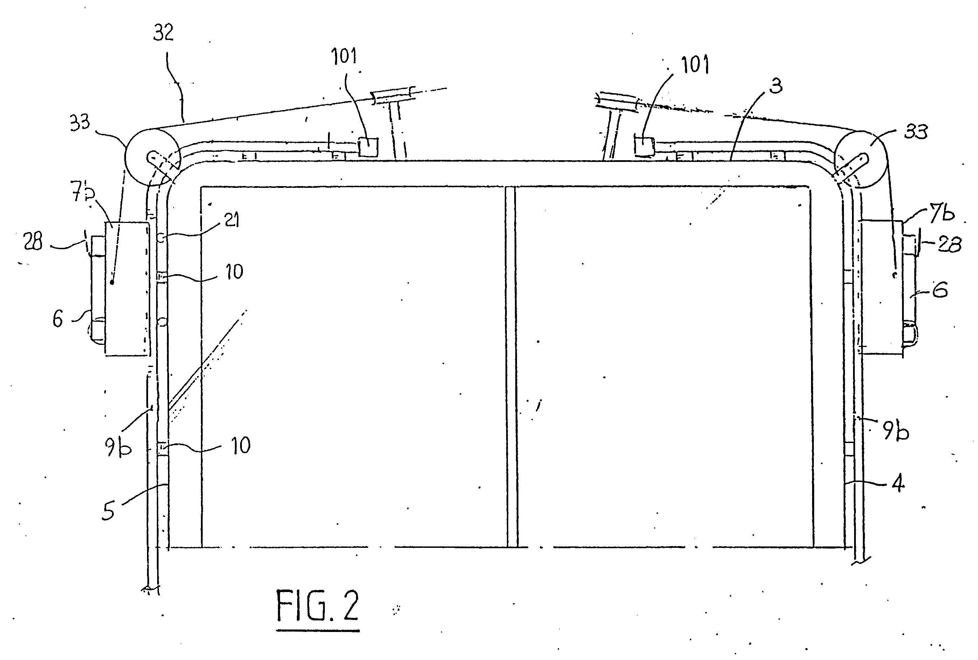

Chaque chariot 7a, 7b est en outre pourvu d'un axe 31 formant organe de fixation de l'une des extrémités d'un lien souple 32 (figures 1 et 2), de préférence d'un câble dont l'autre extrémité est reliée à un organe d'entraînement désigné dans son ensemble par la référence 40 pour monter ou descendre l'ensemble des chariots.

Chaque câble 32 passe, au niveau de la courbure entre les parois latérales 4, 5 et le toit 2 du véhicule, sur une poulie de guidage 33, à axe horizontal et à l'extrémité supérieure du rail sur une poulie de renvoi 34 à axe vertical vers l'organe d'entraînement 40.

Cet organe d'entraînement 40 se compose pour chaque ensemble de l'appareil, de deux tambours d'enroulement 41a, 41b sur lesquels sont fixées les extrémités des câbles 32. Les tambours 41a, 41b sont calés sur un arbre d'entraînement commun 42 qui s'étend transversalement au-dessus du toit 3 et qui est porté par des paliers, non représentés, fixés sur ledit toit.

L'arbre 42 de chaque ensemble de l'appareil est entraîné par un motuer électrique commun M par l'intermédiaire d'une boîte à engrenages 44 et d'un réducteur R.

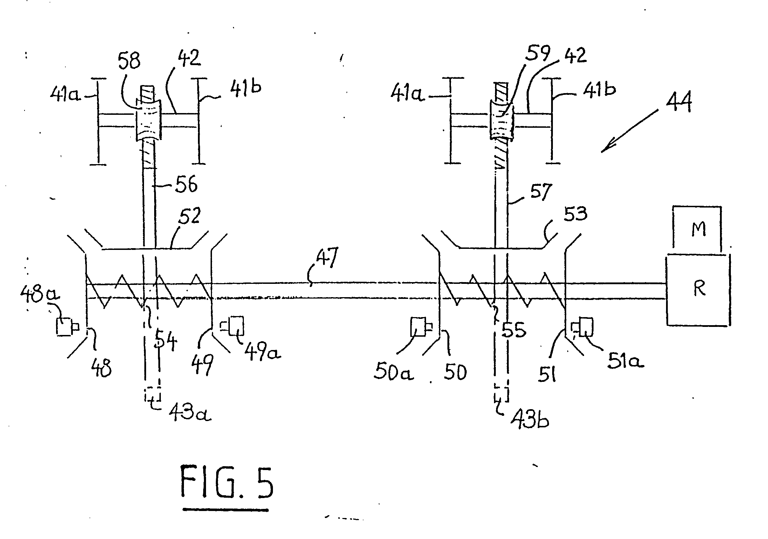

A cet effet, dans l'exemple décrit, et comme représenté sur la figure 5, l'arbre de sortie du moteur M entraîne par l'intermédiaire du réducteur R un arbre au moins partiellement cannelé ou rainuré 47.

Une première et une seconde paires de roues dentées coniques 48, 49, 50, 51 sont montées solidaires en rotation avec l'arbre 47, mais libres axialement de telle manière que d'une part les roues coniques 48, 49 viennent alternativement en prise avec une roue dentée conique 52 et que d'autre part les roues coniques 50, 51 viennent alternativement en prise avec une roue dentée conique 53. Les axes des roues dentées 52, 53 s'étendent perpendiculairement à l'axe 47.

A cet effet, les roues coniques 48, 49 et 50, 51 sont maintenues écartées l'une par rapport à l'autre à l'aide d'un ressort respectivement 54, 55 et le déplacement de chaque roue conique 48, 49, 50, 51 est commandé par un électro-aimant à piston plongeur respectivement 48a, 49a, 50a, 51a de façon à entraîner en rotation chaque roue dentée 52 et 53 dans un sens ou dans l'autre comme on le verra ultérieurement.

Chaque roue dentée 52, 53 est reliée à une vis sans fin 56, 57 qui coopère avec un pignon respectivement 58, 59 monté chacun sur l'arbre d'entraînement 42 des tambours 41a, 41b. Chaque roue dentée 52, 53 est en outre reliée à un carré d'entraînement respectivement 43a, 43b, afin de permettre l'entraînement manuel de chaque ensemble séparément en cas de panne électrique.

Les électro-aimants 48a, 49a, 50a, 51a sont électriquement reliés à un tableau de commande disposé dans l'habitacle ou dans tout autre emplacement approprié du véhicule.

Chaque ensemble de l'appareil est avantageusement pourvu d'interrupteurs de fin de course non représentés disposés au début et à la fin du trajet de chaque chariot afin de limiter le déplacement de celui-ci. Les interrupteurs sont électriquement reliés au tableau de commande qui arrête le moteur dès que le chariot correspondant vient en contact avec un interrupteur.

L'entraînement de l'appareil peut aussi être réalisé par la prise de force du véhicule. Dans ce cas, la prise de force est reliée à la boîte à engrenages par une connection flexible.

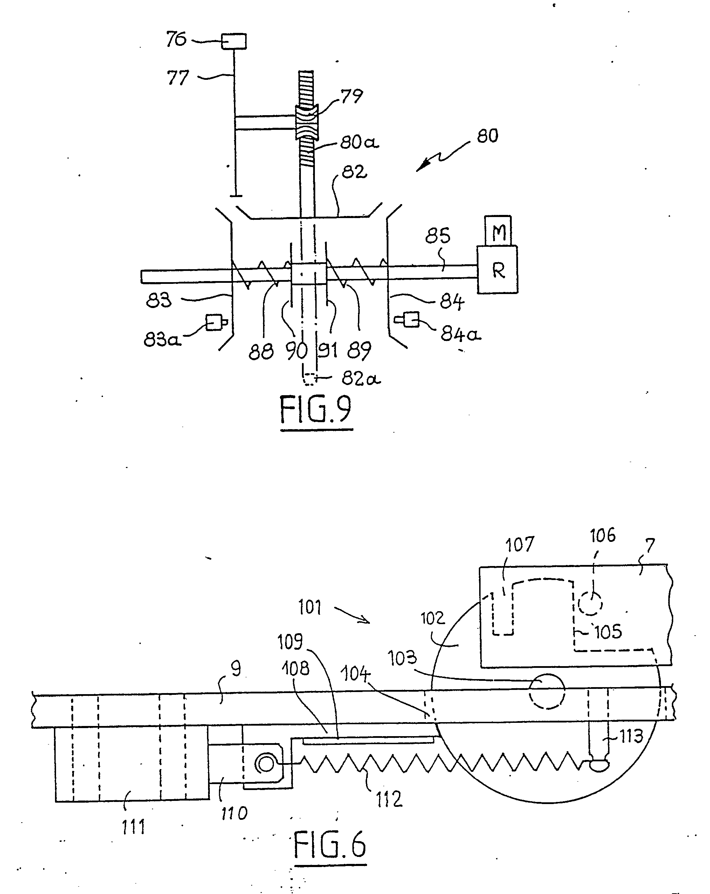

Chaque ensemble de l'appareil est en outre pourvu de dispositifs de verrouillage 101 (voir figure 6) qui maintiennent les chariots 7a, 7b avec leur charge 6 dans leur position sur le toit 3 du véhicule pendant le transport.

Chaque dispositif de verrouillage comporte un disque 102 monté fou sur un axe 103 disposé transversalement sur chaque rail 9. Le disque 102 s'étend vers le toit à travers une fente longitudinale 104 du rail. Le disque de verrouillage 102 est pourvu d'une première encoche 105 destinée à coopérer avec une barre transversale 106 disposée entre les ailes latérales 13, 14 du chariot 7. Cette première encoche 105 forme un angle de 90°. Une seconde encoche rectangulaire de verrouillage 107 est disposée sur le même demi-cercle que la première encoche 104. La seconde encoche 107 est destinée à coopérer avec un verrou 108 guidé dans une glissière 109 fixée au dessous du rail 9. Le verrou 108 est à son extrémité opposée articulé sur l'extrémité d'une tige 110 d'un vérin 111 destiné à déplacer le verrou 108 dans sa position de déverrouillage.

Par ailleurs, la tige 110 est reliée à l'extrémité d'un ressort 112 dont l'autre extrémité est accrochée à un téton 113 fixé au dessous du rail 9. Le ressort 112 sollicite le verrou 108 vers la position de verrouillage de celui-ci dans l'encoche 107 du disque 102.

L'appareillage fonctionne de la manière suivante. Dans ce qui suit, on se bornera à décrire le fonctionnement d'un ensemble de l'appareillage, l'autre ensemble fonctionnant de manière analogue. Il est évident que le véhicule peut être muni que d'un ensemble d'un côté ou de l'autre.

Les deux chariots 7a, 7b de l'ensemble de l'appareillage se trouvent dans leur position basse comme représenté sur la figure 1, en contact avec les interrupteurs de fin de course respectifs. L'échelle 6 est disposée transversalement sur les fers 28 des deux chariots 7a, 7b et attachée à l'aide des sangles 30. L'opérateur appuie sur le bouton correspondant du tableau de commande de façon à actionner l'électro-aimant par exemple 48a qui déplace la roue conique 48 à l'encontre de l'action du ressort 54 vers sa position en prise avec la roue conique 52. Le moteur M est mis en marche pour entraîner en rotation l'arbre 47 par l'intermédiaire du réducteur R. Le mouvement de rotation est transmis à la roue conique 52 par la roue conique 48. La roue conique 52 entraîne les tambours 41a, 41b dans le sens d'enroulement de chaque câble 32 grâce à la vis sans fin 56, au pignon 58 et à l'arbre 42. Sous l'action des câbles 32, les chariots 7a et 7b guidés par les rails 9a, 9b montent simultanément avec leur charge, passent par la partie incurvée de ceux-ci et continuent vers le centre du toit jusqu'à ce qu'ils viennent en contact sur les interrupteurs de fin de course non représentés. L'électro-aimant 48a est remis dans sa position de repos et la roue conique 48, sous l'effet du ressort 54, s'écarte de la roue conique 52.

En arrivant à l'extrémité supérieure des rails 9a et 9b, chaque chariot 7a et 7b déclenche le dispositif de verrouillage 101 correspondant. La roue transversale 106 de chaque chariot pénètre dans l'encoche 105 du disque 102 ce qui a pour effet de faire pivoter de 90° ledit disque de telle manière que l'encoche 107 vienne se positionner en face du verrou 108 qui sous l'effet du ressort 112 pénètre dans ladite encoche pour bloquer le disque 102 et maintenir chaque chariot avec sa charge en position haute pendant le transport.

Pour descendre la charge, l'opérateur appuie sur le bouton correspondant du tableau de commande de façon à déverrouiller les chariots 7a, 7b en rappelant par l'intermédiaire du vérin 111 le verrou 108 qui se dégage de l'encoche 107 du disque 102 et ensuite à actionner l'électro-aimant, par exemple 49a, qui déplace la roue conique 49 à l'encontre de l'action du ressort 54 vers sa position en prise avec la roue dentée 52. Le moteur M est mis en marche, ce qui entraîne en rotation, par l'intermédiaire de la roue 52, de la vis sans fin 56, du pignon 58 et de l'arbre 42, les tambours 41a, 41b dans le sens de déroulement des câbles 32. Les chariots 7a, 7b se déplacent vers le bas guidés sur les rails 9a, 9b jusqu'à ce qu'ils viennent en contact avec les interrupteurs de fin de course.

L'électro-aimant 49a revient alors dans sa position de repos et la roue conique 49 est sollicitée par le ressort 54 vers la position dans laquelle elle n'est plus en prise avec la roue 52.

Le fonctionnement de l'autre ensemble de l'appareillage est analogue à celui qui vient d'être décrit.

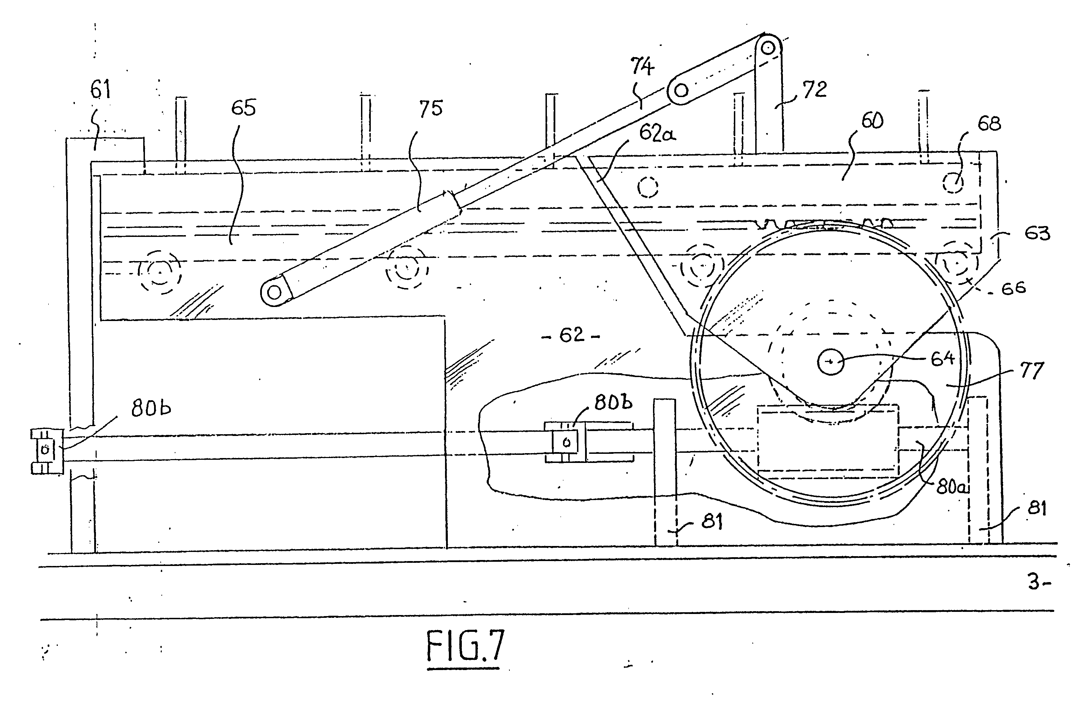

Dans un second mode de réalisation représenté aux figures 7 à 9, l'organe support mobile destiné à recevoir une charge est formé par un réceptacle 60 ayant la forme d'un bac allongé et qui est disposé au centre du toit du véhicule.

Le réceptacle 60 peut être déplacé longitudinalement et est guidé par un bâti (62, 63) s'étendant sur toute la longueur du réceptacle 60. Le bâti est constitué de deux montants verticaux 62 qui ménagent un couloir de guidage du réceptacle 60 et qui comportent chacun à l'une de ses extrémités une découpe 62a. Au niveau de la découpe 62a est positionné un axe transversal 64 sur lequel sont montées pivotantes deux plaques verticales opposées 63 qui prolongent, au niveau de ladite découpe, la partie supérieure des montants verticaux 62. Les montants verticaux 62 et les plaques verticales 63 sont munis, à intervalles réguliers, de galets porteurs horizontaux 66 formant un chemin de roulement pour le réceptacle 60. A cet effet, le fond du réceptacle 60 comporte sur sa surface extérieure des éléments tubulaires 65 s'étendant sur toute la longueur dudit réceptacle et qui reposent sur les galets porteurs 66.

Les plaques verticales 63 sont en outre munies sur leur face intérieure de galets de guidage horizontaux 68 régulièrement espacés et qui sont destinés à pénétrer dans des rainures 70 ménagées sur toute la longueur des faces latérales du réceptacle 60.

Une équerre 61 est prévue à l'extrémité des montants verticaux 62, opposée à la découpe 62a, pour immobiliser verticalement le réceptacle 60 en position de transport.

Par ailleurs, chaque plaque verticale 63 est pourvue d'une petite patte 72 s'étendant vers le haut et dont l'extrémité libre est articulée à l'extrémité d'une tige 74 d'un vérin d'amortissement 75. L'autre extrémité de chaque vérin 75 est articulée sur le montant vertical 62 correspondant.

Le fond du bac 60 est muni extérieurement d'une crémaillère longitudinale 76 qui coopère avec une roue dentée 77 solidaire d'un manchon 78 monté libre en rotation sur l'axe d'articulation 64. Sur le manchon 78 est également fixé un pignon 79.

Le pignon 79 est en prise avec une vis sans fin formant une partie filetée d'un arbre 80a relié à une boîte à engrenages 80 par l'intermédiaire de cardans 80b. L'arbre 80a s'étend parallèlement au toit du véhicule et est à ses extrémités portée par des supports 81 reliés au toit. L'arbre 80a est à son extrémité opposée par rapport à sa partie filetée relié à une roue conique 82 (voir figure 9). La roue conique 82 est disposée de façon à pouvoir coopérer avec l'une ou l'autre de deux roues coniques 83, 84 montées solidaires en rotation sur un arbre d'entraînement cannelé ou rainuré 85. Les deux roues 83, 84 sont axialement déplaçables pour venir en prise alternativement avec la roue 82.

Le déplacement de chaque roue 83, 84 vers sa position en prise avec la roue 82 est commandé par un électro-aimant 83a, 84a respectivement.

Les roues coniques 83, 84 sont sollicitées vers leur position dégagée à l'aide d'un ressort 88, respectivement 89 enfilé sur l'arbre d'entraînement 85 et prenant appui d'un côté contre la roue conique cor respondante et de l'autre côté contre un flasque d'appui 90, respectivement 91 monté sur l'arbre 85. L'arbre 85 est entraîné par un moteur électrique M par l'intermédiaire d'un réducteur R. L'entraînement de l'appareil peut aussi, comme dans le premier mode de réalisation, être réalisé par la prise de force du véhicule et il y a dans ce cas une connection flexible entre la prise de force et la vis sans fin 93.

Le réceptacle 60 est en outre muni d'un interrupteur de fin de course, non représenté, qui est disposé à l'extrémité avant du réceptacle dans les rainures 70 et qui est d'un côté actionné par l'équerre 61 et de l'autre côté par l'un des galets 68.

L'appareil est, comme dans le premier mode de réalisation, pourvu d'un tableau de commande non représenté disposé dans l'habitacle du véhicule ou dans un autre endroit facilement accessible.

L'appareil suivant le deuxième mode de réalisation qui vient d'être décrit fonctionne de la façon suivante.

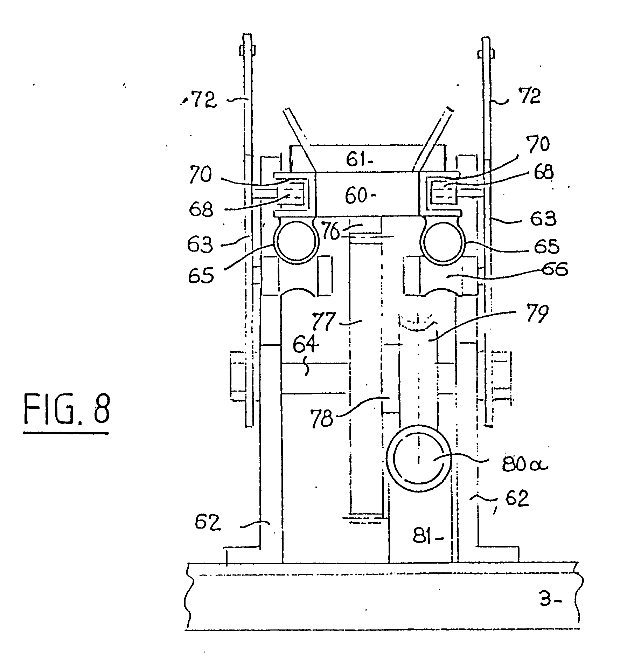

Pour le transport, le réceptacle 60 se trouve dans la position représentée sur les figures 7 et 8. Pour déplacer le bac vers l'arrière, l'opérateur appuie sur le bouton correspondant du tableau de commande, ce qui actionne l'électro-aimant par exemple 83a, afin de déplacer la roue conique correspondante 83 dans sa position en prise avec la roue conique 82 qui entraîne la vis sans fin 80a dans un premier sens. La vis sans fin 80a entraîne le pignon 79 qui est relié en rotation à la roue 77 en prise avec la crémaillère 76. La crémaillère 76 se déplace longitudinalement avec le réceptacle vers l'arrière du véhicule. Le réceptacle guidé par les galets 66 et 68 n'est plus bloqué perpendiculairement par l'équerre 61 et cont nue son mouvement de translation parallèlement au toit du véhicule, jusqu'à une position de basculement qui est la position dans laquelle le centre de gravitation du réceptacle avec sa charge se trouve aligné sur l'axe d'articulation 64. Dans cette position, le réceptacle relié aux plaques 63 par l'intermédiaire des galets 68 bascule autour de l'axe d'articulation 64 avec les plaques. Le basculement de cet ensemble est amorti par les vérins 75 dont les tiges 74 sortent lentement des cylindres. Le mouvement de basculement continue jusqu'à ce que le réceptacle soit incliné d'à peu près 45° par rapport à l'horizontale. Le réceptacle continue sa translation jusqu'au moment où l'interrupteur de fin de course non représenté vient en contact avec le galet de guidage correspondant 68. L'électro-aimant 83a n'est plus alimenté et la roue conique 83 se dégage de la roue conique 82 sous l'action du ressort 88. Le réceptacle se trouve maintenant incliné à l'arrière du véhicule et descendu à une hauteur d'environ 30-40 cm du sol, ce qui permet de retirer ou d'introduire une charge.

Pour remonter le réceptacle, l'opérateur agit sur le tableau de commande afin de commander le moteur et d'actionner l'électro-aimant 84a qui déplace l'autre roue conique 84 vers sa position en prise avec la roue conique 82. Le pignon 77 agit sur la crémaillère 76 ce qui a pour effet de remonter le réceptacle sur le toit du véhicule. Le réceptacle est progressivement déplacé vers sa position de basculement vers l'horizontale et il continue ensuite sa translation jusqu'à ce que l'interrupteur de fin de course vienne en contact avec l'équerre 61. L'électro-aimant n'est plus alimenté et la roue conique 84 se dégage de la roue conique 82 sous l'effet du ressort 89. Le réceptacle se trouve de nouveau dans sa position de transport.

La roue dentée 82 est également reliée à un carré d'entraînement 82a afin de permettre l'entraînement manuel en cas de panne électrique.

On peut aussi envisager une combinaison des deux modes de réalisation en équipant le véhicule d'un appareil comportant des chariots latéruax guidés sur des rails et un réceptacle central, ce qui permet ainsi d'augmenter la capacité de chargement du véhicule. Dans ce cas, tous les dispositifs de déplacement des supports sont entraînés par un seul moteur grâce à un arbre commun remplaçant les arbres 47 et 85 de chaque mode de réalisation.

**Revendications**

1.- Appareil de manutention automatique de charges allongées sur le toit (3) d'un véhicule (2) et plus particulièrement destiné à monter ou descendre des charges sur le ou à partir dudit toit, comportant au moins un organe support (7a, 7b ; 60) de réception d'une charge (6), caractérisé en ce qu'il comporte en outre un bâti de guidage (9a, 9b ; 62, 63) de l'organe support (7a, 7b ; 60) et des moyens de déplacement (32, 41a, 41b ; 76, 77) dudit organe support accouplés à un mécanisme d'entraînement (M).

2.- Appareil selon la revendication 1, caractérisé en ce que le bâti de guidage de l'organe support (7a, 7b) est constitué de deux rails (9a, 9b) s'étendant sur l'une ou les deux parois latérales (4, 5) du véhicule et se prolongeant sur le toit (3) dudit véhicule.

3.- Appareil selon les revendications 1 et 2, caractérisé en ce que l'organe support est formé d'un chariot avant (7a) et d'un chariot arrière (7b) destinés à recevoir la charge (6) et montés mobiles chacun sur le rail de guidage correspondant (9a, 9b).

4.- Appareil selon la revendication 3, caractérisé en ce que chaque chariot (7a, 7b) est constitué d'un châssis rectangulaire (11) sur lequel est monté au moins un essieu (15, 16) comportant une première (20) et une seconde (21) paires de galets disposées de part et d'autre du rail (9a, 9b).

5.- Appareil selon les revendications 3 et 4, caractérisé en ce qu'un élément porteur (24) de la charge (6) est monté de manière amovible sur le châssis (11) de chaque chariot (7a, 7b).

6.- Appareil selon l'une des revendications 1 à 4, caractérisé en ce que les moyens de déplacement de l'organe support sont constitués pour chaque chariot avant et arrière (7a, 7b) par un lien souple (32) dont une extrémité est fixée audit chariot et dont l'autre extrémité est fixée à un tambour d'enroulement et de déroulement (41a, 41b).

7.- Appareil selon la revendication 6, caractérisé en ce que les tambours d'enroulement et de déroulement (41a, 41b) des liens souples (32) sont montés sur un arbre commun (42) entraîné en rotation par le mécanisme d'entraînement (M) au moyen notamment d'une boîte à engrenage (44).

8.- Appareil selon la revendication 7, caractérisé en ce que la boîte à engrenage (44) comporte d'une part un arbre (47) entraîné par le mécanisme d'entraînement (43) par l'intermédiaire d'un réducteur (R) et d'autre part au moins deux roues coniques (48, 49 ; 50, 51) montées axialement déplaçables sur l'arbre (47) et venant en prise alternativement avec une roue conique (52 ; 53) d'entraînement de l'arbre (42) des tambours (41a, 41b).

9.- Appareil selon la revendication 8, caractérisé en ce que les roues coniques (48, 49 ; 50, 51) sont maintenues écartées l'une par rapport à l'autre à l'aide d'un ressort (54 ; 55) et sollicitées vers leur position en prise avec la roue conique (52 ; 53) par un électro-aimant (48a, 49a ; 50a, 51a).

10.- Appareil selon la revendication 1, caractérisé en ce que le bâti de guidage de l'organe support (60) est constitué par deux montants verticaux (62) disposés de part et d'autre dudit organe support (60) et ménageant un couloir de guidage dudit organe support, chacun desdits montants verticaux (62) étant à l'une de ses extrémités pourvu d'une découpe (62a) au niveau de laquelle est positionné un axe transver sal (64) sur lequel sont montées pivotantes deux plaques verticales opposées (63) prolongeant, au niveau de ladite découpe, la partie supérieure des montants verticaux (62).

11.- Appareil selon la revendication 10, caractérisé en ce que l'organe support est constitué par un réceptacle mobile (60) ayant la forme d'un bac allongé disposé longitudinalement sur la partie centrale du toit (3) du véhicule et pouvant être entraîné longitudinalement par les moyens de déplacement (76, 77) et basculé par les plaques verticales (63).

12.- Appareil selon les revendications 10 et 11, caractérisé en ce que chacune des plaques verticales (63) est munie d'au moins deux galets de guidage (68) alignés dans le sens de la longueur du réceptacle (60) et destinés à pénétrer dans une rainure (70) s'étendant longitudinalement sur toute la face extérieure des deux côtés latéraux du réceptacle.

13.- Appareil selon la revendication 12, caractérisé en ce que chacune des plaques verticales (63) est à sa partie supérieure reliée à une tige (74) d'un vérin d'amortissement (75) du basculement du réceptacle (60).

14.- Appareil selon l'une quelconque des revendications 11 à 13, caractérisé en ce que le fond du réceptacle (60) est sur sa surface extérieure muni de deux éléments tubulaires longitudinaux opposés (65) s'étendant sur toute la longueur du réceptacle et destinés à reposer sur des galets porteurs (66) régulièrement disposés sur la longueur des montants (62) du châssis et sur les plaques verticales (63) de façon à former un chemin de roulement pour le réceptacle (60).

15.- Appareil selon la revendication 11, caractérisé en ce que les moyens de déplacement du réceptacle sont constitués par une crémaillère longitu dinale (76) disposée extérieurement sur le fond du réceptacle (60) et entraînée par une roue dentée (77) montée sur l'axe d'articulation (64) et qui est elle-même entraînée en rotation par le mécanisme d'entraînement (M) au moyen notamment d'une boîte à engrenage (80).

16.- Appareil selon la revendication 15, caractérisé en ce que la boîte à engrenage (80) comporte d'une part un arbre (85) entraîné par le mécanisme d'entraînement (M) par l'intermédiaire d'un réducteur (R) et d'autre part deux roues coniques (83, 84) montées axialement déplaçables sur l'arbre (85) et venant en prise alternativement avec une roue conique (82) d'entraînement d'un pignon (79) qui entraîne la roue dentée (77) en prise avec la crémaillère (76) du réceptacle (60).

17.- Appareil selon l'une des revendications précédentes, caractérisé en ce que le mécanisme d'entraînement (M) est un moteur électrique.

18.- Appareil selon l'une des revendications 1 à 16, caractérisé en ce que le mécanisme d'entraînement (M) est une prise de force accouplée au moteur du véhicule (2).

19.- Véhicule pourvu d'un appareil de manutention suivant l'une quelconque des revendications précédentes.

FIG. 1

EP 0 393 286 A1

FIG.2

EP 0 393 286 A1

FIG.4

FIG.3

EP 0 393 286 A1

FIG. 5

76
77
79
80a
80
82
85
M
R
83
84
83a
84a
88 90 91 89
82a

FIG.9

107
106
7
101
102
109
103
108
104
9
105
113
111
110
112

FIG.6

FIG.7

FIG. 8

EP 0 393 286 A1

Office européen
des brevets

RAPPORT DE RECHERCHE EUROPEENNE

Numero de la demande

EP 89 40 1081

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 399 366 (LOSSERAND MADOUX)<br>* En entier * | 1 2,6,7<br>,17,19 | B 60 R 9/042 |
| Y |  | 3,18 | |
| Y | US-A-2 746 628 (NEYRA)<br>* En entier * | 3 | |
| Y | FR-A- 986 618 (RATEAU)<br>* En entier * | 18 | |
| A |  | 1,4,6,<br>17,19 | |
| X | US-A-4 439 086 (THEDE)<br>* Figures; colonne 3, ligne 22 -<br>colonne 4, ligne 41 * | 1,2,17,<br>19 | |
| A |  | 6 | |
| X | FR-A-2 600 954 (ATELIERS SIBILLE ET<br>CIE)<br>* Revendications 1-3; page 1, lignes<br>1-29; page 2, lignes 10-23; figures 1,4<br>* | 1 | |
| A |  | 10,11,<br>19 | DOMAINES TECHNIQUES RECHERCHES (Int. Cl.5)<br><br>B 60 R |
| X | DE-A-2 931 882 (KLEINDIENST)<br>* En entier * | 1,17,19 | |
| A |  | 10,11,<br>13-15 | |
| A | NL-A- 266 008 (BLOEM)<br>* Figures * | 10,14 | |
| | ---       -/- | | |

Le présent rapport a été établi pour toutes les revendications

| Lieu de la recherche | Date d'achèvement de la recherche | Examinateur |
|---|---|---|
| LA HAYE | 22-12-1989 | DUBOIS B.F.J. |

Numero de la demande

EP 89 40 1081

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 622 160 (POBANZ)<br>* En entier * | 1-19 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 22-12-1989 | DUBOIS B.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0403)